# DEMANDE DE BREVET EUROPEEN

(11) **EP 3 104 391 A1**
(43) Date de publication de la demande: **14.12.2016**
(21) Numéro de dépôt: 15171516.6
(22) Date de dépôt: 10.06.2015
(51) Int. Cl.: H01H 33/98, H01B 3/56, H01H 33/22

(54) **APPAREILLAGE ELECTRIQUE A ISOLATION GAZEUSE REMPLI D'UN GAZ DIELECTRIQUE**

(71) Demandeur: General Electric Technology GmbH, 5400 Baden (CH)
(72) Inventeur: BIQUEZ, François, 73100 Pugny-Chatenod (FR); KIEFFEL, Yannick, 38440 Saint-Jean de Bournay (FR); SILVANT, Sébastien, 69003 Lyon (FR)
(74) Mandataire: Brevalex

(57) **Abrégé**

L'invention concerne un appareillage électrique (10) à isolation gazeuse à moyenne ou haute tension comportant :
- une enceinte (12) fermée hermétiquement qui est remplie d'un gaz diélectrique, ledit gaz comportant au moins l'un parmi du fluoronitrile, du dioxyde de carbone, du diazote ou du dioxygène,
- au moins deux contacts électriques (16, 20) qui sont agencés coaxialement à un axe principal (A) de l'enceinte (12), dont au moins un (20) des contacts (16, 20) est mobile axialement dans l'enceinte (12) entre une position de fermeture dans laquelle les deux contacts (16, 20) sont en contact électrique l'un avec l'autre et une position d'ouverture dans laquelle les contacts (16, 20) sont situés à distance l'un de l'autre, et
- un mécanisme de coupure (14) pour l'extinction d'un arc électrique se formant entre les deux contacts (16, 20) lors d'un déplacement dudit au moins un contact mobile (20) depuis la position de fermeture vers la position d'ouverture,

caractérisé en ce que le mécanisme de coupure est du type à arc tournant.

## Description

### DOMAINE TECHNIQUE

L'invention concerne un appareillage électrique tel qu'un disjoncteur pour une ligne de courant à moyenne, haute ou très haute tension, utilisant un gaz diélectrique qui présente pas ou peu de risques environnementaux.

Ce gaz diélectrique, qui remplace l'hexafluorure de soufre (SF6), présente un comportement différent de l'hexafluorure de soufre, notamment en ce qui concerne l'écoulement du gaz. Cela amène à adapter l'appareillage électrique pour s'adapter au gaz utilisé.

### ÉTAT DE LA TECHNIQUE ANTÉRIEURE

L'hexafluorure de soufre (SF6) est un gaz qui est utilisé depuis longtemps dans un appareillage électrique, grâce à ses propriétés d'isolation électrique et de coupure.

Cependant, ce produit présente un risque écologique au cas où il serait relâché à l'air libre, puisqu'il s'agit d'un gaz à effet de serre important.

A titre de substitution pour un tel produit, il a été proposé d'utiliser un mélange gazeux comprenant au moins l'un des gaz suivants : fluoronitriles, dioxyde de carbone (CO2), dioxygène (02) ou diazote (N2).

Les documents FR-3.011.138 et FR-1.456.584 décrivent l'utilisation de fluoronitriles dans des disjoncteurs à soufflage d'arc.

Selon un tel type de disjoncteur à soufflage d'arc, le mélange gazeux est comprimé pendant l'ouverture du disjoncteur et il est projeté en direction de l'arc électrique qui se forme entre les deux contacts électriques du disjoncteur pour interrompre le courant lors de son passage par zéro.

La structure du disjoncteur qui est associé à un tel mélange gazeux est modifiée par rapport à un disjoncteur associé à un mélange contenant du SF6.

Ces modifications dans la structure du disjoncteur concernent notamment la buse de soufflage et ont pour conséquence une usure rapide de la buse et donc une perte de performances du disjoncteur.

L'invention a pour but de proposer un appareillage électrique pour lequel l'utilisation d'un mélange gazeux diélectrique ne contenant pas d'hexafluorure de soufre (SF6) n'entraine pas de pertes de performances des moyens de coupure.

### EXPOSÉ DE L'INVENTION

L'invention propose un appareillage électrique à isolation gazeuse à moyenne ou haute tension comportant :
- une enceinte fermée hermétiquement qui est remplie d'un gaz diélectrique, ledit gaz comportant au moins l'un parmi du fluoronitrile, du dioxyde de carbone, du diazote ou du dioxygène,
- au moins deux contacts électriques qui sont agencés coaxialement à un axe principal de l'enceinte, dont au moins un des contacts est mobile axialement dans l'enceinte entre une position de fermeture dans laquelle les deux contacts sont en contact électrique l'un avec l'autre et une position d'ouverture dans laquelle les contacts sont situés à distance l'un de l'autre, et
- un mécanisme de coupure pour l'extinction d'un arc électrique se formant entre les deux contacts lors d'un déplacement dudit au moins un contact mobile depuis la position de fermeture vers la position d'ouverture,
caractérisé en ce que le mécanisme de coupure est du type à arc tournant.

La coupure de l'arc électrique par le principe de l'arc tournant a pour avantage d'être indépendante de l'écoulement du mélange d'isolement pour des courants faibles atteignant jusqu'à environ 10% du pouvoir de coupure. En effet, c'est la rotation de l'arc, sous l'effet du champ magnétique produit par le mécanisme de coupure, qui amène l'arc à se refroidir puis à s'éteindre. Pour les courants plus élevés, c'est-à-dire supérieurs à 10% du pouvoir de coupure, la coupure de l'arc par sa rotation est complétée par l'écoulement d'un flux de gaz sous pression.

Cependant, selon un tel mode de réalisation, les surfaces des composants délimitant les passages du gaz diélectrique ne sont pas usées par les cycles successifs de coupures, à la différence d'un dispositif antérieur à auto-soufflage de l'arc électrique.

De préférence, la proportion volumique en fluoronitrile dans le mélange total est comprise entre 0% et 20%.

De préférence, le fluoronitrile est du heptafluoro-iso-butyronitrile.

De préférence, la proportion volumique de dioxygène (02) peut varier entre 0 % et 25 %.

De préférence, la proportion volumique de dioxyde de carbone (CO2) ou de diazote (N2) dans le mélange total est définie pour assurer le complément de remplissage.

De préférence, la proportion volumique de dioxyde de carbone (CO2) ou de diazote (N2) dans le mélange total est de 55 % à 100 % de la pression totale du mélange.

### BRÈVE DESCRIPTION DES DESSINS

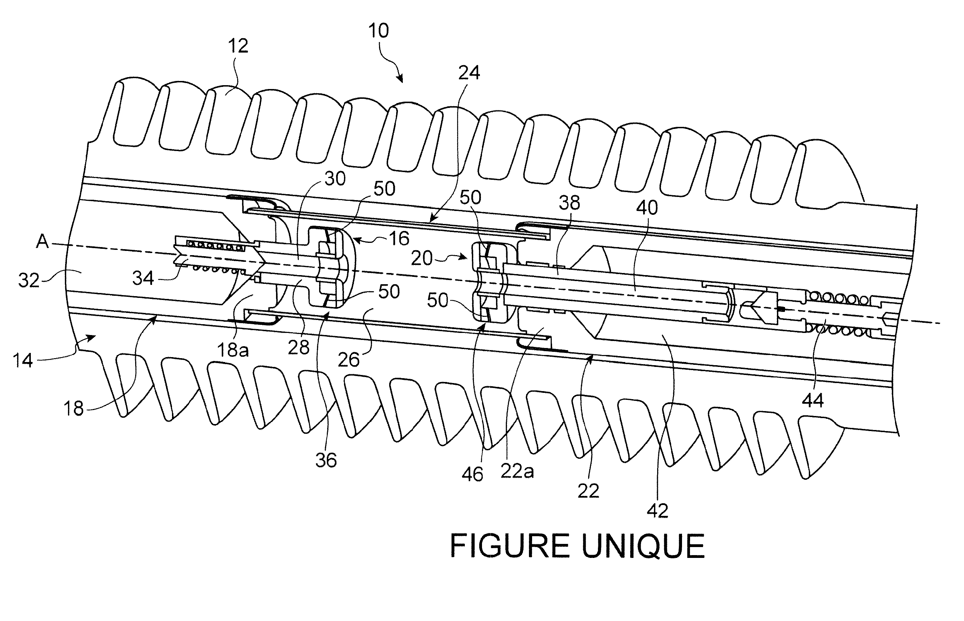

D'autres caractéristiques et avantages de l'invention apparaîtront à la lecture de la description détaillée qui suit pour la compréhension de laquelle on se reportera à la figure unique qui est une représentation schématique en coupe axiale d'un appareillage électrique selon l'invention.

### EXPOSÉ DÉTAILLÉ DE MODES DE RÉALISATION PARTICULIERS

On a représenté à la figure unique un disjoncteur 10, à isolation gazeuse qui comporte une enceinte 12 dans laquelle est logé un mécanisme de coupure 14.

L'enceinte 12 est un élément de révolution centré sur son axe principal A et délimite un volume intérieur cylindrique centré sur l'axe principal A.

Le mécanisme de coupure 14 comporte un contact d'arc fixe 16 monté sur une extrémité ou une paroi 18a d'un porte contact fixe 18 et un contact d'arc mobile 20 monté sur une extrémité ou une paroi 22a d'un porte contact mobile 22.

Le porte contact fixe 18 et le porte contact mobile 22 ont chacun une surface extérieure dont une partie est de forme cylindrique, qui est coaxiale et complémentaire du volume intérieur de l'enceinte 12.

Selon une variante de réalisation, le mécanisme de coupure comporte, en plus des contacts d'arc 16, 20 représentés, deux contacts permanents qui sont reliés électriquement l'un au l'autre lorsque le mécanisme de coupure 14 est en position de fermeture et qui sont séparés l'un de l'autre avant la séparation des contacts d'arc 16, 20, pour que l'arc électrique ne se forme pas entre les contacts permanents.

Selon encore une autre variante de réalisation, le mécanisme de coupure comporte en outre un troisième contact.

Ce troisième contact fait office de contact permanent et introduit une commutation supplémentaire lors d'une phase d'ouverture du mécanisme de coupure, en changeant le cheminement du courant électrique.

Ainsi, dans un premier temps, le courant électrique circule d'abord directement depuis le contact permanent vers le contact opposé puis, dans un deuxième temps, le courant électrique circule depuis le contact d'arc vers le contact opposé.

Le mécanisme de coupure 14 comporte en outre un tube 24 en matériau isolant qui est relié aux parois 18a, 22a du porte contact fixe 18 et du porte contact mobile 22.

Le tube isolant 24 est coaxial à l'axe principal A du disjoncteur 10 et il est relié de manière étanche aux gaz à chaque porte contact 18, 22.

Le tube isolant 24 est par exemple réalisé en un matériau choisi parmi les matériaux suivants : le PPS (polyphénylène sulphide), le PEEK (polyetheretherketone), le PTFE (polytétrafluoroéthylène), la vitrocéramique (MACOR) ou le mica aggloméré (mica ou mica muscovite ou mica phlogopite). En variante non limitative, le PPS ou le PEEK peuvent également être chargés, par exemple de mica.

Le tube 24 délimite, avec les porte-contacts 18, 22, une chambre d'auto-expansion 26, aussi appelée volume thermique, dans laquelle les contacts d'arc 16, 20 sont logés l'un en face de l'autre.

Selon une variante de réalisation, la chambre d'auto-expansion 26 est ouverte radialement, par l'intermédiaire de trous de communication (non représentés) formés à titre d'exemple non limitatif dans le porte contact fixe 18 et/ou dans le porte contact mobile 22.

Le contact d'arc fixe 16 comporte un corps tubulaire 28 qui est coaxial à l'axe principal A de l'enceinte 12 et qui délimite un canal axial 30 reliant la chambre d'auto expansion 26 à une chambre d'échappement 32 délimitée par une portion du porte contact fixe 18.

Le contact d'arc fixe 16 peut, à titre de variante, comporter un clapet 34 pour empêcher que le gaz présent dans la chambre d'échappement 32 ne rentre dans la chambre d'auto expansion 26.

Le contact d'arc fixe 16 comporte aussi une tête 36 de forme annulaire faisant face au contact d'arc mobile 20 qui est de diamètre extérieur supérieur au diamètre du corps 28. L'orifice central de la tête 36 est de même diamètre que le canal axial 30 du corps 28.

Il sera compris que l'invention n'est pas limitée à ce mode de réalisation et que le diamètre extérieur de la tête annulaire 36 peut être identique ou inférieur au diamètre du corps 28. L'orifice central de la tête 36 sera alors inférieur au diamètre du canal axial 30 du corps 28.

Le contact d'arc mobile 20 comporte lui aussi un corps tubulaire 38 qui est coaxial à l'axe principal A de l'enceinte 12 et qui délimite un canal axial 40 reliant la chambre d'auto expansion 26 à une deuxième chambre d'échappement 42 délimitée par une portion du porte contact mobile 22. Le contact d'arc fixe 16 peut lui aussi, à titre de variante, comporter un clapet 44 pour empêcher que le gaz présent dans la chambre d'échappement 42 ne rentre dans la chambre d'auto expansion 26.

Le contact d'arc mobile 20 comporte aussi une tête 46 de forme annulaire faisant face au contact d'arc mobile 20 qui est de diamètre extérieur supérieur au diamètre du corps 38. L'orifice central de la tête 46 est de même diamètre que le canal axial 40 du corps 38.

Il sera compris que l'invention n'est pas limitée à ce mode de réalisation et que le diamètre extérieur de la tête 46 peut être identique ou inférieur au diamètre du corps 38. L'orifice central de la tête 46 sera alors inférieur au diamètre du canal axial 40 du corps 38.

La tête 36, 46 de chaque contact 16, 20 comporte une ou plusieurs fentes 50.

Chaque fente 36 est de préférence orientée inclinée par rapport à l'axe A du dispositif. De préférence, chaque fente 50 est ainsi orientée afin de forcer le passage du courant dans une direction qui est non axiale, ici, légèrement en biais depuis les pastilles faces d'extrémités en vis-à-vis des contacts 16, 20, et vers l'extérieur.

Le positionnement de ces fentes 50 est tel que lors de l'ouverture du mécanisme de coupure 14, passage du courant au travers des contacts 16, 20 génère un champ magnétique ayant une composante radiale. Ce champ magnétique génère une force orthoradiale sur l'arc électrique qui se forme aussi entre les faces en vis-à-vis des deux contacts 16, 20.

L'arc électrique est alors forcé à tourner autour de l'axe principal A du dispositif, ce qui contribue à son soufflage.

Il sera compris que l'invention n'est pas limitée à ce mode de réalisation des moyens pour générer un champ magnétique.

A titre d'exemple non limitatif, l'une et/ou l'autre des têtes 36, 46 comporte une bobine de bitter pour générer le champ magnétique.

Les volumes intérieurs de l'enceinte 12, de la chambre d'auto-expansion 26 et des chambres d'échappement 32, 42, sont remplis d'un gaz diélectrique assurant l'isolation électrique quand les contacts 16 et 20 sont en position de pleine ouverture, correspondant à la position ouverte de disjoncteur.

Ce gaz diélectrique permet aussi de faciliter le soufflage de l'arc électrique lorsque, sous la chaleur de l'arc électrique, le gaz présent dans la chambre d'auto-expansion 26 se dilate puis s'échappe vers les chambres d'échappement 32, 42, en soufflant l'arc électrique et en passant par les trous de communication, le cas échéant.

Ce gaz diélectrique consiste en un mélange de plusieurs gaz parmi du fluoronitrite tel que par exemple du heptafluoro-iso-butyronitrile, du dioxyde de carbone, du diazote ou du dioxygène.

La proportion d'heptafluoro-iso-butyronitrile dans le mélange est déterminée par la température minimale de fonctionnement de l'appareillage 10, ainsi qu'en fonction de la pression de remplissage souhaitée. Cette proportion est ainsi déterminée de sorte que la pression partielle heptafluoro-iso-butyronitrile soit inférieure à sa pression de vapeur saturante à la température minimale d'utilisation de l'appareil. Typiquement la proportion heptafluoro-iso-butyronitrile dans le mélange total est comprise entre 0%vol et 20%vol.

La proportion de dioxygène (02) peut varier entre 0 % et 25%

La proportion de dioxyde de carbone (CO2) ou d'azote (N2) assure le complément de remplissage, elle peut être de 55 % à 100 % de la pression totale du mélange.

Dans le cas de l'utilisation de l'appareillage 10 pour la coupure de courants de forte intensité, le soufflage de l'arc par le mélange gazeux est utilisé en complément de l'extinction par arc tournant.

Pour cela, les sections des orifices de passage du gaz seront de relativement faibles dimensions, pour être adaptées au comportement du mélange heptafluoro-iso-butyronitrile, CO2, O2, N2.

Au fur et à mesure de l'utilisation de l'appareillage, les phases de coupure et l'usure électrique n'entraîneront pas de variation des sections d'écoulement, ce qui permet de garantir une stabilité des performances de l'appareillage dans le temps, pour la coupure des courants plus importants.

De plus, l'utilisation d'un tel mélange de gaz avec un dispositif de coupure 14 à arc tournant permet de réduire les sections d'écoulement par rapport à un dispositif conçu pour un gaz diélectrique à base d'hexafluorure de soufre.

Cela permet notamment d'avoir un mécanisme de coupure 14 plus compact, limitant ainsi les coûts de fabrication.

## Revendications

1. Appareillage électrique (10) à isolation gazeuse à moyenne ou haute tension comportant :
- une enceinte (12) fermée hermétiquement qui est remplie d'un gaz diélectrique, ledit gaz comportant au moins l'un parmi du fluoronitrile, du dioxyde de carbone, du diazote ou du dioxygène,
- au moins deux contacts électriques (16, 20) qui sont agencés coaxialement à un axe principal (A) de l'enceinte (12), dont au moins un (20) des contacts (16, 20) est mobile axialement dans l'enceinte (12) entre une position de fermeture dans laquelle les deux contacts (16, 20) sont en contact électrique l'un avec l'autre et une position d'ouverture dans laquelle les contacts (16, 20) sont situés à distance l'un de l'autre, et
- un mécanisme de coupure (14) pour l'extinction d'un arc électrique se formant entre les deux contacts (16, 20) lors d'un déplacement dudit au moins un contact mobile (20) depuis la position de fermeture vers la position d'ouverture,
**caractérisé en ce que** le mécanisme de coupure est du type à arc tournant.

2. Appareillage électrique (10) selon la revendication précédente, **caractérisé en ce que** la proportion volumique en fluoronitrile dans le mélange total est comprise entre 0% et 20%.

3. Appareillage électrique (10) selon l'une quelconque des revendications précédentes, **caractérisé en ce que** le fluoronitrile est du heptafluoro-iso-butyronitrile.

4. Appareillage électrique (10) selon l'une quelconque des revendications précédentes, **caractérisé en ce que** la proportion volumique de dioxygène (02) peut varier entre 0 % et 25 %.

5. Appareillage électrique (10) selon l'une quelconque des revendications précédentes, **caractérisé en ce que** la proportion volumique de dioxyde de carbone (CO2) ou de diazote (N2) dans le mélange total est définie pour assurer le complément de remplissage.

6. Appareillage électrique (10) selon la revendication précédente, **caractérisé en ce que** la proportion volumique de dioxyde de carbone (CO2) ou de diazote (N2) dans le mélange total est de 55 % à 100 % de la pression totale du mélange.
